# DEMANDE DE BREVET EUROPEEN

(11) **EP 3 333 396 A1**
(43) Date de publication de la demande: **13.06.2018**
(21) Numéro de dépôt: 17204068.5
(22) Date de dépôt: 28.11.2017
(51) Int. Cl.: F02D 41/10, F02B 39/10, F02D 11/10, F02D 41/00

(54) **PROCÉDÉ DE COMMANDE D'UN MOTEUR À COMBUSTION INTERNE SURALIMENTÉ PAR UN TURBOCOMPRESSEUR COUPLÉ À UN COMPRESSEUR ADDITIONNEL OU À UNE ASSISTANCE ÉLECTRIQUE**

(30) Priorité: 02.12.2016 FR 1661891
(71) Demandeur: RENAULT s.a.s., 92100 Boulogne-Billancourt (FR)
(72) Inventeur: LEFEBVRE, Alain, 91630 Leudeville (FR)

(57) **Abrégé**

L'invention concerne un procédé de commande d'un moteur à combustion interne suralimenté par un turbocompresseur couplé soit à un système d'assistance électrique du turbocompresseur, soit à un compresseur additionnel, dans lequel, à la suite d'une demande d'accélération dudit moteur (E0), on régule la pression de suralimentation (PCOLL) autour d'une consigne de pression de suralimentation (PCOLL_cible) à l'aide du système d'assistance électrique du turbocompresseur ou du compresseur additionnel, ledit procédé étant caractérisé en ce qu'on détecte (E1) si la demande d'accélération correspond à une phase de fonctionnement transitoire du moteur en fonction du niveau de couple demandé et/ou de l'évolution dans le temps du degré d'enfoncement de la pédale d'accélérateur associée au moteur, et on active (E2) le système d'assistance électrique du turbocompresseur ou le compresseur additionnel uniquement en cas de détection de la phase de fonctionnement transitoire du moteur.

## Description

La présente invention concerne de façon générale le domaine de la commande des systèmes de suralimentation des moteurs à combustion interne suralimentés par un turbocompresseur couplé soit à un système d'assistance électrique du turbocompresseur, soit à un compresseur additionnel, qu'il s'agisse d'un compresseur additionnel de type électrique entraîné en rotation au moyen d'un moteur électrique ou encore d'un compresseur additionnel de type mécanique, qui peut par exemple être couplé au vilebrequin du moteur.

Un turbocompresseur est composé d'une turbine et d'un compresseur entraîné en rotation par la turbine, à travers un arbre reliant la turbine au compresseur. La turbine est disposée dans le circuit d'échappement du moteur sur le trajet des gaz d'échappement et est entraînée en rotation par les gaz d'échappement. Le compresseur est disposé dans le circuit d'admission sur le trajet d'admission d'air dans le moteur. Il compresse l'air injecté dans le moteur, permettant une suralimentation du moteur par rapport à un régime d'admission à la pression atmosphérique. Les moteurs suralimentés à l'aide d'un tel turbocompresseur présentent l'inconvénient d'avoir un temps de réponse non nul sur la montée en couple du moteur. Ce temps de réponse est dû à la montée en vitesse de l'ensemble tournant du turbocompresseur, qui ne se fait pas de manière instantanée. Il en résulte un délai dans l'apparition du couple développé par le moteur en réponse à une commande d'accélération de régime.

Il est connu, pour répondre à ce problème de temps de réponse de la montée en couple d'un moteur suralimenté par turbocompresseur, d'assister électriquement le turbocompresseur, en prévoyant un moteur électrique couplé à l'arbre du turbocompresseur. Un tel turbocompresseur assisté électriquement est nommé EAT, acronyme anglo-saxon pour « Electric Assist Turbocharger ». L'assistance électrique permet d'accélérer la mise en action du turbocompresseur, notamment pendant les phases en transitoire où un fort couple est requis pour les reprises à bas régime du véhicule.

Il est également connu d'utiliser un compresseur additionnel pour améliorer le temps de réponse du système de suralimentation et du moteur dans les zones de fonctionnement de celui-ci à bas régime.

La stratégie actuelle d'utilisation du compresseur additionnel consiste à activer le système d'assistance électrique du turbocompresseur ou le compresseur additionnel dès qu'une demande d'accélération est requise par le conducteur.

Toutefois, l'activation intempestive à bas régime du compresseur additionnel de type mécanique est pénalisante pour la consommation de carburant du moteur, car on prélève alors inutilement de l'énergie sur le vilebrequin du moteur. L'activation intempestive du système d'assistance électrique du turbocompresseur ou du compresseur additionnel de type électrique est également pénalisante, dans la mesure où elle entraîne une décharge de la batterie alimentant le moteur électrique et réduit ainsi les capacités d'utilisation ultérieure du système.

Dans ce contexte, la présente invention a pour but de proposer un procédé de commande d'un moteur à combustion interne suralimenté par un turbocompresseur couplé soit à un système d'assistance électrique du turbocompresseur, soit à un compresseur additionnel, qui soit exempt, au moins en partie, des limitations précédemment évoquées.

A cette fin, la présente invention concerne un procédé de commande d'un moteur à combustion interne suralimenté par un turbocompresseur couplé soit à un système d'assistance électrique du turbocompresseur, soit à un compresseur additionnel, dans lequel, à la suite d'une demande d'accélération dudit moteur, on régule la pression de suralimentation autour d'une consigne de pression de suralimentation à l'aide du système d'assistance électrique du turbocompresseur ou du compresseur additionnel, ledit procédé étant caractérisé en ce qu'on détecte si la demande d'accélération correspond à une phase de fonctionnement transitoire du moteur en fonction du niveau de couple demandé et/ou de l'évolution dans le temps du degré d'enfoncement de la pédale d'accélérateur associée au moteur, et on active le système d'assistance électrique du turbocompresseur ou le compresseur additionnel uniquement en cas de détection de la phase de fonctionnement transitoire du moteur.

De préférence, la détection de la phase de fonctionnement transitoire du moteur comprend la comparaison à un seuil prédéfini de l'évolution dans le temps du degré d'enfoncement de la pédale d'accélérateur associée au moteur.

Avantageusement, la phase de fonctionnement transitoire du moteur est détectée lorsque la dérivée par rapport au temps du degré d'enfoncement de la pédale d'accélérateur est supérieure au seuil prédéfini.

De préférence, la détection de de la phase de fonctionnement transitoire du moteur comprend la comparaison à un seuil prédéfini de l'écart entre le couple réalisé et le niveau de couple demandé.

Avantageusement, on désactive le système d'assistance électrique du turbocompresseur ou le compresseur additionnel une fois la consigne de pression de suralimentation atteinte ou dépassée.

Avantageusement, le turbocompresseur comprenant une turbine à géométrie variable, on régule la pression de suralimentation, après désactivation du système d'assistance électrique du turbocompresseur ou du compresseur additionnel, en agissant sur une commande de la géométrie de la turbine.

En variante, le turbocompresseur comprenant une turbine à géométrie fixe, on régule la pression de suralimentation, après désactivation du système d'assistance électrique du turbocompresseur ou du compresseur additionnel, en agissant sur une commande d'une soupape de décharge, aménagée entre une soupape d'échappement des gaz d'échappement à la sortie du moteur et l'entrée de la turbine, permettant de régler la quantité de gaz d'échappement passant au travers de la turbine.

Avantageusement, en cas de non détection de la phase de fonctionnement transitoire du moteur, on maintient désactivé le système d'assistance électrique du turbocompresseur ou le compresseur additionnel et la demande d'accélération est assurée par le seul turbocompresseur.

L'invention concerne également un moteur à combustion interne suralimenté comprenant un turbocompresseur couplé soit à un système d'assistance électrique du turbocompresseur, soit à un compresseur additionnel, et comprenant une unité de contrôle électronique du moteur destinée à agir sur le système d'assistance électrique du turbocompresseur ou sur le compresseur additionnel de façon à réguler la pression de suralimentation autour d'une consigne de pression de suralimentation en cas de demande d'accélération du moteur, caractérisé en ce ladite unité de contrôle est adaptée pour mettre en oeuvre le procédé tel que décrit ci-dessus.

L'invention concerne encore un véhicule automobile, caractérisé en ce qu'il comprend un moteur tel que décrit ci-dessus.

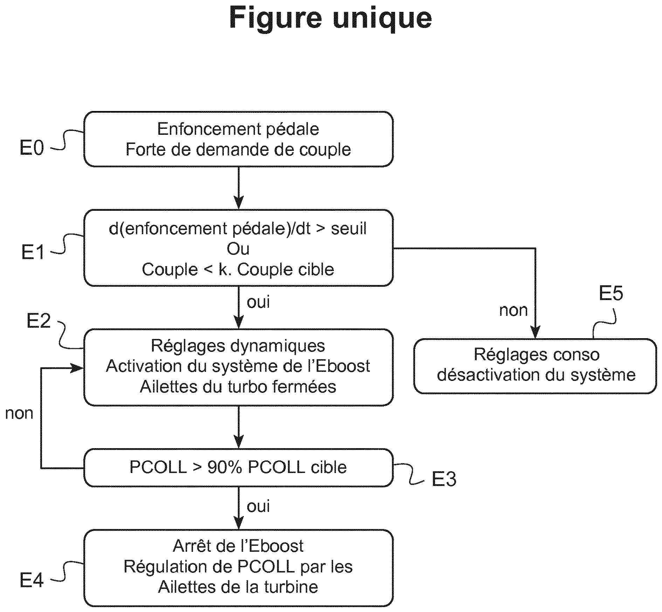

D'autres particularités et avantages de l'invention ressortiront à la lecture de la description faite ci-après, donnée à titre indicatif mais non limitatif, en référence à la figure unique illustrant un organigramme décrivant le procédé de commande selon l'invention.

Le procédé de commande de l'invention s'applique à un moteur à combustion interne équipé d'un turbocompresseur destiné à assurer la suralimentation du moteur et qui est couplé soit à système d'assistance électrique, soit à un compresseur additionnel, qu'il soit électrique (« E-boost » selon la terminologie anglo-saxonne) ou mécanique, de façon à permettre d'améliorer le temps de réponse du système de suralimentation du moteur, en particulier dans les zones de fonctionnement du moteur à bas régime. L'unité de contrôle électronique du moteur (ECU) est apte à réguler la pression de suralimentation du moteur autour d'une consigne de pression de suralimentation en agissant notamment sur le système d'assistance électrique du turbocompresseur ou sur le compresseur additionnel en cas de demande d'accélération.

L'unité de contrôle électronique du moteur est adaptée pour mettre en oeuvre le procédé de commande de l'invention qui va être décrit en référence à la figure unique. L'unité de contrôle électronique du moteur utilise l'information recueillie par un capteur de pression de suralimentation et un capteur de position de la pédale d'accélérateur associée au moteur, de façon à situer le niveau de charge du moteur et pour détecter une demande de fort couple en fonctionnement transitoire du moteur. On distingue en effet des modes de fonctionnement du moteur stabilisé où le couple à délivrer est souhaité sensiblement constant, et les modes de fonctionnement transitoire où le couple à délivrer est susceptible de varier de manière importante, respectivement de faible à élevé. En mode de fonctionnement transitoire, on souhaite une disponibilité de variation de couple la plus rapide possible.

Ainsi, dans une étape E0, lors d'une demande de fort couple, la phase de fonctionnement transitoire du moteur est détectée, dans une étape E1, par la comparaison à un seuil prédéfini de la variation dans le temps du degré d'enfoncement de la pédale d'accélérateur. Le fonctionnement transitoire est par exemple détecté lorsque la dérivée par rapport au temps du degré d'enfoncement de la pédale d'accélérateur, soit la vitesse d'enfoncement de la pédale, est supérieure à un seuil prédéfini. A l'étape E1, la détection de de la phase de fonctionnement transitoire du moteur peut également être effectuée sur la base d'une comparaison à un seuil prédéfini de l'écart entre le couple réalisé et le niveau de couple demandé. Autrement dit, on vérifie si le niveau de couple demandé est supérieur à un seuil.

Lorsque l'une de ces conditions sur le niveau de couple demandé supérieur à un seuil et sur la vitesse d'enfoncement de la pédale, correspondant à une demande de forte accélération du conducteur, également supérieure à un seuil, sont vérifiées à l'étape E1, on active dans une étape E2 le système d'assistance électrique du turbocompresseur ou le compresseur additionnel « e-boost » ou mécanique. La vérification de ces conditions à l'étape E1 permet donc de n'activer le système d'assistance électrique du turbocompresseur ou le compresseur additionnel qu'en cas de détection d'une phase de fonctionnement transitoire du moteur. Dans ces conditions, le système d'assistance électrique du turbocompresseur ou le compresseur additionnel n'est activé que pour les demandes de fort couple à bas régime.

Cette activation mise en oeuvre à l'étape E2 est conservée tant que la pression PCOLL mesurée dans le collecteur d'admission du moteur est inférieure à une consigne de pression PCOLL_cible représentative de la pression de suralimentation requise, par exemple tant que la pression dans le collecteur d'admission n'a pas atteint environ 90% de la consigne de pression.

Lorsqu'on vérifie dans une étape E3 que la pression dans le collecteur PCOLL atteint environ 90% de la consigne de pression, on désactive dans une étape E4 le système d'assistance électrique du turbocompresseur ou le compresseur additionnel activé précédemment à l'étape E2, et la régulation de la pression de suralimentation se fait par le turbocompresseur.

Si le turbocompresseur destiné à assurer la suralimentation du moteur est un turbocompresseur du type comprenant une turbine à géométrie variable, comportant par exemple des ailettes à orientation variable, la régulation de la suralimentation, après l'arrêt du système d'assistance électrique du turbocompresseur ou du compresseur additionnel, peut être effectuée en agissant sur la commande de la géométrie de la turbine, soit sur la commande de l'orientation des ailettes de la turbine. S'il s'agit d'un turbocompresseur du type comprenant une turbine à géométrie fixe, dans ce cas, on régule la pression de suralimentation en agissant sur la commande de la soupape de décharge (« Wastegate » selon la terminologie anglo-saxonne), qui est la soupape aménagée entre la soupape d'échappement des gaz d'échappement en sortie du moteur et l'entrée de la turbine, et qui permet de régler la quantité de gaz d'échappement passant au travers de la turbine.

En revanche, en cas de non détection de la phase de fonctionnement transitoire du moteur à l'étape E2 suite à la demande d'accélération du moteur, autrement dit si aucune des conditions liées à la vitesse d'enfoncement de la pédale et au niveau de couple demandé n'est vérifiée, on maintient désactivé dans une étape E5 le système d'assistance électrique du turbocompresseur ou le compresseur additionnel, et la demande d'accélération est alors assurée par le seul turbocompresseur, soit sans l'assistance du système d'assistance électrique ou du compresseur additionnel. Ce mode de fonctionnement permettant de conserver désactivé le système d'assistance électrique du turbocompresseur ou le compresseur additionnel est favorable à une minimisation de la consommation du moteur.

Le procédé de l'invention permet donc d'obtenir deux modes de fonctionnement pour gérer la suralimentation lors d'une demande de fort couple, selon qu'un phase transitoire est détectée ou non à l'étape E2, l'un dans lequel le système d'assistance électrique du turbocompresseur ou le compresseur additionnel est activé et qui est adapté aux forts besoins d'accélération à bas régime, et l'autre permettant de conserver désactivé le système d'assistance électrique du turbocompresseur ou le compresseur additionnel, pour obtenir une consommation minimale.

## Revendications

1. Procédé de commande d'un moteur à combustion interne suralimenté par un turbocompresseur couplé soit à un système d'assistance électrique du turbocompresseur, soit à un compresseur additionnel, dans lequel, à la suite d'une demande d'accélération dudit moteur (E0), on régule la pression de suralimentation (PCOLL) autour d'une consigne de pression de suralimentation (PCOLL_cible) à l'aide du système d'assistance électrique du turbocompresseur ou du compresseur additionnel, ledit procédé étant **caractérisé en ce qu'**on détecte (E1) si la demande d'accélération correspond à une phase de fonctionnement transitoire du moteur en fonction du niveau de couple demandé et/ou de l'évolution dans le temps du degré d'enfoncement de la pédale d'accélérateur associée au moteur, et on active (E2) le système d'assistance électrique du turbocompresseur ou le compresseur additionnel uniquement en cas de détection de la phase de fonctionnement transitoire du moteur.

2. Procédé selon la revendication 1, **caractérisé en ce que** la détection (E1) de la phase de fonctionnement transitoire du moteur comprend la comparaison à un seuil prédéfini de l'évolution dans le temps du degré d'enfoncement de la pédale d'accélérateur associée au moteur.

3. Procédé selon la revendication 2, **caractérisé en ce que** la phase de fonctionnement transitoire du moteur est détectée lorsque la dérivée par rapport au temps du degré d'enfoncement de la pédale d'accélérateur est supérieure au seuil prédéfini.

4. Procédé selon l'une quelconque des revendications 1 à 3, **caractérisé en ce que** la détection (E1) de de la phase de fonctionnement transitoire du moteur comprend la comparaison à un seuil prédéfini de l'écart entre le couple réalisé et le niveau de couple demandé.

5. Procédé selon l'une quelconque des revendications précédentes, **caractérisé en ce qu'**on désactive (E4) le système d'assistance électrique du turbocompresseur ou le compresseur additionnel une fois la consigne de pression de suralimentation atteinte ou dépassée.

6. Procédé selon la revendication 5, **caractérisé en ce que**, le turbocompresseur comprenant une turbine à géométrie variable, on régule (E4) la pression de suralimentation en agissant sur une commande de la géométrie de la turbine.

7. Procédé selon la revendication 5, **caractérisé en ce que**, le turbocompresseur comprenant une turbine à géométrie fixe, on régule (E4) la pression de suralimentation en agissant sur une commande d'une soupape de décharge, aménagée entre une soupape d'échappement des gaz d'échappement en sortie du moteur et l'entrée de la turbine, permettant de régler la quantité de gaz d'échappement passant au travers de la turbine.

8. Procédé selon l'une quelconque des revendications précédentes, **caractérisé en ce qu'**en cas de non détection de la phase de fonctionnement transitoire du moteur, on maintient désactivé (E5) le système d'assistance électrique du turbocompresseur ou le compresseur additionnel et la demande d'accélération est assurée par le seul turbocompresseur.

9. Moteur à combustion interne suralimenté comprenant un turbocompresseur couplé soit à un système d'assistance électrique du turbocompresseur, soit à un compresseur additionnel, et comprenant une unité de contrôle électronique du moteur destinée à agir sur le système d'assistance électrique du turbocompresseur ou sur le compresseur additionnel de façon à réguler la pression de suralimentation autour d'une consigne de pression de suralimentation en cas de demande d'accélération du moteur, caractérisé en ce ladite unité de contrôle est adaptée pour mettre en oeuvre le procédé selon l'une quelconque des revendications précédentes.

10. Véhicule automobile, **caractérisé en ce qu'**il comprend un moteur selon la revendication 9.
